# EUROPEAN PATENT SPECIFICATION

(11) **EP 2 031 418 B1**
(45) Date of publication and mention of the grant of the patent: **01.11.2017**
(21) Application number: 07016779.6
(22) Date of filing: 27.08.2007
(51) Int. Cl.: G01S 13/75, H04S 7/00, G01S 13/87, G06F 3/01

(54) **Tracking system using RFID (radio frequency identification) technology**
Verfolgungssystem mit RFID-(Funkfrequenzidentifikations-) Technologie
Système de suivi utilisant la technologie RFID (identification de la fréquence radio)

(43) Date of publication of application: 04.03.2009
(73) Proprietor: Harman Becker Automotive Systems GmbH, 76307 Karlsbad (DE)
(72) Inventor: Münch, Tobias, Dipl.-Ing., 75334 Straubenhardt (DE); Hess, Wolfgang, Dr.-Ing., 76307 Karlsbad (DE); Beyer, Stefan, Dipl.-Ing., 75334 Straubenhardt (DE)
(74) Representative: Grünecker Patent- und Rechtsanwälte PartG mbB

(56) References cited:
- WO-A-96/03188
- US-A- 5 424 747
- US-A1- 2001 038 354
- US-B1- 7 085 710
- American Honda Motor Co., Inc.: "in-VEHICLE ENTERTAINMENT SYSTEM", U.S.A. Operating Instructions P/N: 08A23-9E1-010, 2002, pages 1-25, XP007910413, Retrieved from the Internet: URL:http://techinfo.honda.com/rjanisis/pub s/AU/AAM32142.pdf [retrieved on 2009-11-03]
- ROBJOHNS H: "Beyerdynamic Headzone Pro. Surround Sound Headphone System", INTERNET CITATION, 1 March 2007 (2007-03-01), pages 1-4, XP007912672, Retrieved from the Internet: URL:http://www.soundon sound.com/sos/mar07/articles/headzonepro:h tm [retrieved on 2010-04-15]
- "The RFID Tag Antenna: Orientation Sensitivity (REV. 1.0)", INTERNET CITATION, 1 October 2005 (2005-10-01), page 2pp, XP007912697, Retrieved from the Internet: URL:http://www.impinj.com/WorkArea/linkit. aspx?LinkIdentifier=id&ItemID=2559 [retrieved on 2010-04-16]

## Description

The present invention relates to a tracking system and a method for determining spatial orientation of an object. More specifically, the present invention relates to tracking the orientation of an object, in particular of a human head wearing headphones simulating a surround sound reproduction of audio data, by employing RFID (Radio Frequency Identification) technology.

Tracking systems in different fields of technology are known in the art. Document WO 9603188 A describes a computerized game board, wherein a board game is combined with a video game running on a computer. A plurality of toy figures can be positioned on the game board in order to provide the associated computer with the information necessary for the associated video game portion, determination of the position and also possibly the orientation of the toy figures on the game board is required. For this purpose, the game board is divided into cells. An electromagnetic excitation coil is provided below each cell. The toy figures include transponder coils and the responses are sensed by a sensing antenna that is associated with the entire game board. Such an arrangement is suitable for determining the position of a toy figure on the game board. In order to also determine the orientation of a toy figure, the toy figures are provided with additional transponders. The orientation is determined by determining the positions of the different transponders with respect to the game board cells.

Document US 5424747 A describes a system for determining the position and orientation of a vehicle. The system employs an interrogation/response process. Electromagnetic radiation is transmitted from a radar. The vehicle is equipped with two antennae having different orientation. Two response signals re-transmitted from the vehicle are characterized by a) different modulation frequencies and b) re-transmission patterns having different spatial orientations.

In recent years, more and more advanced technologies of providing a reproduction of audio data in surround sound quality have emerged. Originally developed for cinematography, such techniques are now increasingly employed in the home environment. Analog as well as digital surround techniques are available. While analog techniques are still widespread in a pure audio environment today, digital techniques are mostly used in the digital audio/video environment.

For surround reproduction, in addition to the conventional left and right front loudspeakers known from the stereo system, a front centre loudspeaker, a pair of left and right rear loudspeakers, and a "subwoofer" are used. A common version of surround sound is the 5.1 technique, according to ITU-Recommendation BS.775-1. In the 5.1 technique, six total channels of sound are provided, wherein 5 channels are foreseen for full range loudspeakers (right-front, centre, left-front, right-rear and left-rear) and one channel for LFE (low frequency effect), or subwoofer loudspeaker. The subwoofer is a type of loudspeaker dedicated to the reproduction of lowest frequencies, typically from about 20Hz to 120Hz. It is difficult for small loudspeakers to reproduce frequencies below 80Hz. Therefore, it is advantageous to use one loudspeaker intended specifically for this task. The document "Beyerdynamic Headzone Pro. Surround Sound Headphone System" by ROBJOHNS H (URL:http://www.soundon sound.com/sos/mar07/ articles/headzonepro:htm) is related to surround headphone systems. Besides the 5.1 technique comprising six separate channels, techniques are also known, wherein a smaller number of independent channels is sufficient. For instance, in an early surround version, the centre loudspeaker is fed by a channel comprising those analog signal portions that are contained in both conventional audio channels (left and right) in phase coherency, and the left and right rear loudspeakers are fed from one channel with inverted phases. On the other hand, recent developments, such as 6.1 and 7.1 techniques, employ an even larger number of channels using discrete channels.

The perception of surround sound reproduced from audio data with the help of a surround reproduction system is generally based on the same principles that we employ for localizing a sound source in space in every day life. Namely, a sound signal from a particular sound source arrives at both ears of a person at different times and non-uniformly, (i.e. with different amplitude, frequency spectrum and phase). Additionally, the outer part of the human ear changes the frequency spectrum of incoming sound signals dependent on the direction of incidence. The human brain combines these auditory cues perceived through the two eardrums, and their differences by moving the head, to localize sound sources in three dimensions. For more details regarding human sound localization we refer to the standard textbook Blauert, Jens (1996): "Spatial hearing - the psychophysics of human sound localization", revised edition, MIT Press, Cambridge, MA.

In the particular situation of surround sound reproduction, for instance in the home theatre system, the ears receive both direct sound from each loudspeaker and multiple reflections, scatterings and absorptions contributed by the room's surfaces and furnishings. By the time it reaches the ears, the sound from each loudspeaker has acquired a unique signature. Taken together, these signatures cue the brain as to the size and the acoustic properties of the room, the loudspeakers' locations and the spatial properties of the original sound.

If it is desired to reproduce surround sound with the help of headphones, a problem arises. In the case of listening via headphones, the effects of amplitude and phase shifting as well as frequency filtering mentioned above that are necessary for localization of a sound source and therefore for generating a surround listening impression are generally eliminated. Instead, in the case of headphones, sound sources are located lateralized at the axis through both ears, inside the head. Therefore, no natural surround sound impression can arise.

In order to compensate for this drawback of headphones as compared to surround sound reproduction using loudspeakers distributed in a room, technologies have been developed that pre-process the audio signals to be fed to headphones in such a way that the amplitude and phase shifts arising are reproduced like in a virtual natural room. Thereby, surrounding sound sources can be simulated for reproduction with stereo headphones. With the help of digital signal processing, the sonic signature of a corresponding loudspeaker properly placed in a defined position in an acoustic environment is imparted to each audio channel. This means that virtual loudspeakers are created in a virtual room, or real loudspeakers are measured in a real room. A processor combines all this information into two encoded channels which are fed to the ears of a person through conventional stereo headphones. The result is a rather natural listening perception like in a real room.

Although the described technology enables to simulate virtual or real loudspeakers in a virtual or a real space, nevertheless a plurality of errors generally occur in perception. A typical error is, for instance, front-back-confusion. Acoustic sources that are played behind the listener are perceived as coming from the front, and vice versa.

Moreover, a further problem arises in the case of reception of simulated surround sound via headphones. Namely, if the head of a person turns while listening to simulated surround sound via headphones, the simulated sound field turns together with the head, in contrast to the situation in conventional surround sound in a room, wherein the sound field remains fixed in the room when the head is turned. This leads to an unnatural and disturbed perception of the sound field.

The arising distortion effect is, for instance, especially relevant in the case of combined audio / video reproduction. While a person listening to surround sound via headphones and at the same time viewing the corresponding video sequences on a video screen would expect the corresponding amendment of the sound perception if he or she slightly moves their head, in the case of headphones simulating surround sound no change of the sound field occurs. Therefore, the perceived surround sound differs from what the user would expect. If, for instance, the video screen shows a musician playing at a central position in front of the viewer, and the user turns his or her head to the right, he or she would expect the sound to now come from the left hand side. However, the virtual sound source simulated by the headphones still comes from in front of the person.

In order to compensate for the effects described above, head-tracking systems have been developed. Head-tracking systems are based on continuously acquiring the movement of the head (first of all the orientation, possibly also the position). With the help of the acquired information, an additional pre-processing of the sound data fed to the headphones is performed. The additional pre-processing reflects the movements of the head detected by measurement so that the simulated three-dimensional sound field is perceived as fixed in space although the head permanently moves.

Conventional head-tracking systems employed in the art can be classified as follows:
The first class of tracking systems employ a physical angle measurement device, such as an angular velocity sensor or a gyroscope that is positioned at the headphones for directly measuring a rotation angle of the head.

The second class of tracking systems operate on the basis of transmission time measurement. Signal transmitters continuously emit signals, which are received at detectors. Either the transmitters or the detectors are fixed at the headphones, while the respective counterparts are fixed in the room, wherein the user is located. The detectors are connected to a processing unit that is capable of calculating parameters defining the orientation and position of the head by employing triangulation on the basis of evaluating the signal transmission time between transmitters and detectors. These kinds of signals employed include infrared, radio wave and ultrasonic signals.

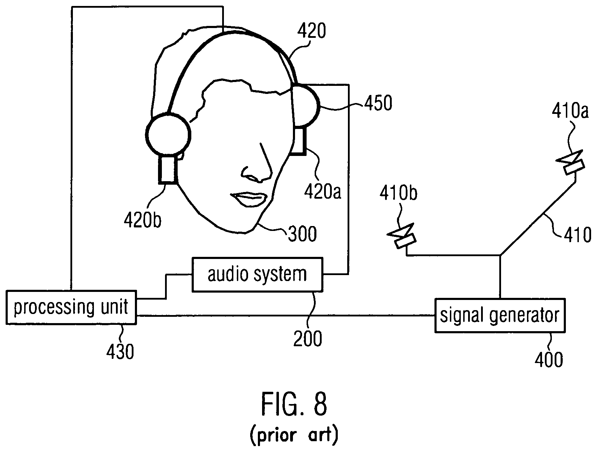

A schematic example of a conventional tracking system of the second class, is illustrated in Fig. 8. Audio system 200 is connected to headphones 450 worn by a user 300. Headphones 450 constitute a movable object to be tracked by the tracking system. The illustrated components of the tracking system comprise signal generator 400, which is connected to transmission device 410 comprising two transmitters 410a and 410b. Detection device 420 comprises two detectors 420a and 420b. In the illustrated example, the detectors 420 are fixed at the headphones, and the signal transmitters 410 are fixed in the room. Both transmitting device 410 and detecting device 420 are connected to processing unit 430 for time synchronization.

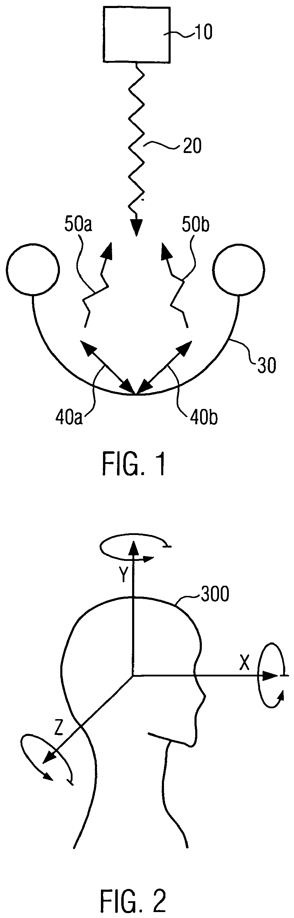

In order to completely determine orientation and position of the head in three dimensions (yaw, roll and pitch, cf. Fig. 2), at least three transmitters in a triangular arrangement fixed with respect to each other, and a respective arrangement of detectors is required. However, in order to determine only a few particular orientation, e.g. head rotation, also called yaw, and possibly position parameters (for instance, in a case where the number of degrees of freedom of motion of the headphones can be assumed to be restricted in good approximation), a smaller number of detectors and transmitters is sufficient. In the example of Fig. 8, two transmitters 410a and 410b are fixed in the room, while two detectors 420a and 420b are attached to the headphones.

Signal generator 400 generates a single or a plurality of detecting signals. The generated detection signal can be of arbitrary shape, however the detection signal preferably comprises a clearly detectable peak in order to define time of transmission and time of detection as exactly as possible for transmission time measurement. For transmission time measurement standard techniques, such as the correlation technique are employed. In case of a plurality of transmitters included in a transmission device 410, such as transmitters 410a and 410b illustrated in Fig. 8, a further requirement is that signals transmitted by the individual transmitters 410a and 410b can be clearly distinguished. This can be achieved, for instance, by employing different frequency ranges or by employing specifically encoded digital signals. Alternatively, subsequent transmission in the time domain is possible.

It is a drawback of both classes of conventional tracking systems mentioned above that the required hardware effort is rather great. This is obvious for the first class of tracking systems, as these tracking systems require a mechanical angular detecting system to be mounted at the headphones. Moreover, an electronic signal must be generated out of the mechanical detection result, and the electronic signal must be provided to a processing unit for evaluation in order to simulate the appropriate amendment to the sound field.

However, the hardware effort required is also rather large for the second class of conventional tracking systems outlined above. The transmission signals employed have to be specifically generated, detected and processed. A system component (transmitter or detector) fixed at the headphones generally requires its own power supply. Such a power supply is particularly disadvantageous in the case of wireless headphones. Moreover, direct visual contact between transmitters and detectors is permanently required for a stable operation of the tracking system. Transmission time measurements generally require time synchronization between transmitters and detectors via an additional synchronization channel, which results in additional hardware effort. Hence, conventional tracking systems lead to considerable additional costs.

The present invention aims to provide a robust tracking system and tracking method for determining orientation of head phones for simulating surround sound reproduction of audio data with a reduced hardware effort and improved cost efficiency.

This is achieved by the features of the independent claims.

It is the particular approach of the present invention to enable orientation tracking of headphones for simulating surround sound reproduction of audio data on the basis of comparing the orientation-dependent response to a signal emitted by a transceiver, received from different transponders fixed to the headphones with different orientations. The response of two transponders relative to each other changes together with changing the respective orientations of the transponders relative to the signal, when the orientation of the headphones in space is changed. Since a single transceiver is employed for emitting the signal and detecting the responses, no separate synchronization channel is necessary.

The transceiver of the tracking system according to the present invention is capable of detecting a level of the respective responses from the first and the second transponder, and the processing unit is preferably capable of comparing the respective response levels, in order to determine the orientation parameter. The present invention employs RFID (radio frequency identification) technology. Accordingly, RFID transponders are employed as the first and the second transponders of the present invention, and the transceiver is an RFID reader. According to RFID technology, the RFID reader emits a signal in the form of a high frequency electromagnetic field. In the simplest case of passive RFID systems, the electromagnetic field induces current in an antenna element of an RFID transponder (RFID tag) located within a certain range of distance from the RFID reader. The induced current influences the field emitted by the RFID reader, and the RFID reader is therefore capable of detecting the influence of the RFID transponder on the electromagnetic field as a response. The level of the induced current, and consequently the level of the response depend on the relative orientation between the electromagnetic field and the antenna element.

According to a particular embodiment of the present invention, the transponders are passive RFID transponders. Passive RFID transponders are specifically advantageous, since they do not require their own power supply, but the amount of energy necessary for operation is fed by the signal field of the transceiver. Preferably, passive RFID systems have an operating frequency in the range of 30kHz to 300kHz.

According to another embodiment, the transponders are active RFID transponders. Active RFID transponders are capable of operating over a larger distance between transponder and reader than passive RFID transponders. Preferably, active RFID systems have an operating frequency in the range of 300MHz to 3GHz.

Preferably, each transponder includes a memory for storing a unique transponder identifier. The unique transponder identifier is included in the response of the transponders, in order to distinguishably detect the responses from different transponders.

In a further preferred embodiment, based on transponder identification, a tracking system according to the present invention is adapted to determine the orientation of two objects. A person skilled in the art is aware that the number of objects, the orientation of which can be determined by a tracking system according to the present invention, including a single transceiver, is not limited to two.

In another preferred embodiment, a third transponder having yet another orientation can be fixed to the object having the first and second transponders. Accordingly, it is enabled to determine a second orientation parameter of the object. A person skilled in the art is aware that up to three orientation parameters of an object can be determined with the help of a suitable arrangement of transponders.

Preferably, the first and the second transponder are attached to a common location at the object. More preferably, the common location is a central portion of the object. Accordingly, the emitted signal perceived by the first and the second transponder is substantially the same, and the responses correspond to the responses of transponders with different orientations to one and the same signal.

According to preferred embodiments of the present invention, the orientations of the transponder antennas include an acute angle or a right angle. More preferably, the antennas include an angle in the range from 45° to 90°.

Preferably, the orientation parameter determined by the tracking system is a rotation angle of the object around a predetermined axis, and the first and the second antenna substantially extend in the plane perpendicular to the predetermined axis. If, for instance, the object is a pair of headphones worn by a person, an orientation parameter preferably to be determined by a tracking system is a rotation angle of the headphones around a central vertical axis of the head of the person. If the first and the second transponder are mounted at a central position of the connecting member of the headphones, and the antenna axes are extending in a plane substantially perpendicular to the central axis of the head, the transponder orientations directly correspond to a rotation angle of the headphones around the vertical axis. Preferably, the portion of the object to which the transponders are fixed remains at a substantially unchanged position with respect to the transceiver. If the transponder positions remain substantially unchanged, any influence on the responses that are caused by position changes rather than orientation changes can be neglected. For instance, in a case where the object is a pair of headphones worn by a person sitting in a vehicle, the mounting position corresponding to a central position of the connecting member of a pair of headphones worn by the person can be considered substantially unchanged with respect to the internal space of the vehicle.

The object to be tracked in accordance with the present invention is a pair of headphones simulating surround sound reproduction of audio data. More preferably, the headphones are wireless headphones.

A tracking method for an object according to the present invention preferably comprises a calibrating step of determining a response of the first and the second transponder corresponding to a basic orientation of the object. More preferably, the calibrating step determines the basic orientation as an average orientation over a predetermined period of time. Further preferably, the calibrating step is initialized by a user input. In the case of tracking headphones worn by a passenger of a vehicle, a basic orientation (average orientation) corresponds to a straightforward orientation of the face of the person. After a user initializes the calibrating phase, the processing unit is aware of the basic orientation of the headphones. Accordingly, further processing of the sound field can be performed based on orientation changes with respect to the basic orientation.

According to a further preferred aspect of the present invention, a vehicle entertainment and information system is provided. The vehicle entertainment and information system comprises headphones simulating a surround reproduction of audio data. The vehicle entertainment and information system further comprises a tracking system according to the present invention. The tracking system is capable of determining an orientation parameter of the headphones.

Preferably, in the vehicle entertainment and information system, the transceiver is included in a head rest mounted to a vehicle seat. Accordingly, the tracking system can operate at a small distance.

Further embodiments of the present invention are the subject matter of dependent claims.

Additional features and advantages of the present invention will become apparent from the following and more particular description, as illustrated in the accompanying drawings, wherein:
Fig. 1 is a schematic illustration of the idea underlying the present invention;
Fig. 2 is an exemplary illustration of the rotational degrees of freedom of a 3-dimensional object (yaw, roll, pitch);
Fig. 3A and Fig. 3B are illustrations of an object having two transponders according to the present invention, and having a single degree of freedom of orientation, which is determined by a single orientation parameter;
Fig. 4 is a schematic overview of an embodiment of the present invention;
Fig. 5 schematically illustrates an embodiment of the present invention, wherein the orientation of two objects is tracked by single transceiver;
Fig. 6 schematically illustrates a tracking system according to an embodiment of the present invention, capable of determining a second orientation parameter of an object;
Fig. 7 schematically illustrates a vehicle that is equipped with a vehicle entertainment and information system including a tracking system according to the present invention; and
Fig. 8 is a scheme illustrating a conventional tracking system for headphones.

Illustrative embodiments of the present invention will now be described with reference to the drawings.

The present invention relates to tracking the orientation of an object with the help of a transceiver-transponder scheme, preferably in RFID technology. An object to be tracked is equipped with at least two RFID tags having a different orientation. Since RFID tags are small and low cost entities, costs for a tracking system can be considerably reduced by the present invention, and a tracking system according to the present invention is particularly suitable for use in mass produced products, such as headphones simulating surround sound. Moreover, in contrast to conventional tracking systems, based on transmission time measurements, no direct visual contact between the object and the fixed signal emitter or detector is required, and no power supply at the headphones is required.

Therefore, a tracking system according to the present invention is particularly suitable for an audio system comprising standard headphones or wireless headphones simulating surround sound. Possible fields of implementation of the present invention are, for instance, headphones for passengers of a vehicle reproducing DVD or other multi-channel sound sources, teleconferencing, 3-D sound generated by a computer (e.g. in connection with computer games) or a handheld device, or home cinematography. However, the fields of implementation of the present invention are not limited to these.

Prior to the detailed description of preferred embodiments of the present invention, the RFID technology will be described briefly.

RFID technology generally refers to a technology for recognition of an item without requiring direct visual contact. In recent years, RFID technology has become common in a plurality of fields, including, for instance, identification and position detection of vehicles, identification of people and animals, contactless IC cards, management of goods in warehouses and other storage facilities and waste management.

An RFID system comprises three basic elements; a transponder called an RFID tag, an RFID reader and a data processing component.

An RFID tag is an electronic device attached to an object. The RFID tag includes an antenna for receiving a signal emitted by the RFID reader, an integrated circuit (IC) and a non-volatile memory. Depending on the particular field of application, further components including a re-writable memory can be included in an RFID transponder.

An RFID reader includes an antenna for emitting or receiving a signal, an electronic circuit for transmitting or receiving the signal to or from the RFID tag and a memory for storing data included in a signal received from a RFID tag. The antenna has a predetermined directivity, based on which an orientation of the antenna in space is defined. If necessary, received data are transmitted to a processing component upon reception or at a later time after storage. Generally, communication in the framework of RFID technology is performed as follows: The reader generates a high frequency alternating electromagnetic field, which is received by the antenna of the RFID transponder, when the tags are within the radio frequency signaling distance of the reader.

In the simplest case of a passive RFID transponder, in the antenna an electric current is induced by the electromagnetic field emitted by the reader. The induced current activates the IC of the RFID tag. Moreover, the generated induction current generates an electromagnetic (response) field that influences the electromagnetic field of the reader. The induction current moreover charges a capacitor for power supply of the IC chip. Therefore, a passive RFID transponder can be operated completely autonomously without any internal power supply or connection to an external power supply. If permanent power supply of a component included in a passive RFID tag is indispensable, the RFID must emit an electromagnetic field permanently (CW - "continuous wave").

Besides passive RFID transponders, active transponders are also known, wherein a battery is included for permanent power supply.

After having been activated, the integrated circuit receives information, such as commands, having been modulated by the reader into the electromagnetic field. Information to be transmitted to the reader is modulated into the response field of the RFID transponder. In particular, such information includes a unique identifier (ID number), that is stored in the non-volatile memory and characterizes a particular RFID tag. When the RFID tag is activated or addressed by an RFID reader, the tag responds with at least its unique identifier. Moreover, other information can be included in the response, upon modulation in response to a respective query by an appropriately modulated RFID reader field. Thereby, information stored in the memory of the RFID tag is transmitted from the RFID tag to the RFID reader, and can be forwarded to the processing unit for further processing.

A direct visual contact is unnecessary for the RFID reader to recognize information of the RFID tag, since an electromagnetic field emitted by the RFID reader transmits through every substance except substances which greatly absorb or reflect electromagnetic waves, such as water or metals. Accordingly, even if the RFID reader and/or the RFID transponder are "hidden" (for instance, when a component is included inside a larger object), the RFID reader can read information from the RFID tag.

A plurality of different types of RFID tags are known in the art. Besides in whether employing active or passive transponders, RFID systems differ in parameters such as operating frequency range, field emitting power of the transceiver, operation range (distance) and others.

In the particular case of a system employing passive transponders, the response is based on inductive coupling of the antenna in the electromagnetic near field of the transceiver. Passive tags employ load modulation, i.e. they extract magnetic field energy by short circuiting. The reader is capable of detecting the respective field changes. Therefore, passive RFID transponders without separate power supply have an especially small size and weight, but are, on the other hand, characterized by only a small operation range (distance between reader and transponder). Generally, passive RFID transponder systems can be operated in a range of the order of approximately a few centimeters. The operation frequency of passive RFID systems is generally in the range of tens to hundreds of Kilohertz (LF - low frequency), or a few Megahertz, up to approximately 30MHz (HF - high frequency/RF - radio frequency).

To the contrary, active transponders operate in the electromagnetic far field. The electromagnetic far field forms electromagnetic waves radiated into space. For obtaining a response, so-called "backscattering" is employed. Backscattering includes absorbing/reflecting the electromagnetic waves. The operating frequency range of active transponders operating the in the far field is mostly ultra high frequency (UHF) from approximately 300MHz to approximately 3GHz, or even in the area of microwaves. As UHF antennas, mostly dipoles are used. Since also dipole antennas are characterized by a particular orientation of an antenna axis, the response obtained by backscattering is generally orientation dependent.

Active RFID transponders are usually fed by a battery for supplying power to the integrated circuit. For power saving, normally active RFID transponders are in a kind of a standby state, and the IC becomes activated only upon a specific activation signal. Although the energy of the battery is not directly employed for generating the modulated response signal, the operation range of the RFID transponders is nevertheless much larger than that of passive RFID transponders, since the backscattering principle requires less field energy than inductive coupling in the near field. An operation range of up to several meters or tens of meters is therefore possible with active transponder technology.

Moreover, so-called semi-passive RFID transponders are known in the art, which receive a signal from the reader on a first frequency and use the received energy to reply on a second frequency.

It is noted that the type of transponders to be employed within the framework of the present invention is not limited to a particular kind, but the types of transponders as described above can be employed as desired in a particular situation of application in a tracking system.

Fig. 1 is a principal schematic illustration of the construction of a tracking system in accordance with an embodiment of the present invention.

The tracking system comprises transceiver 10, two transponders 40a and 40b, the antennas of which have a different orientation, and a processing unit (not shown). Transceiver 10 is fixed with respect to a predetermined space, as a reference frame.

The orientation of the object is to be determined with respect to said reference frame. Such a predetermined space being employed as a reference frame may be, for instance, a room in a flat, as well as the interior of an arbitrarily moving vehicle.

The transponders are fixed to an object 30 to be tracked (in the illustrated case: a pair of headphones connected by a connection member). In the scheme of Fig. 1, the transponders are represented by double arrows, representing the axes of the respective transponder antennas 40a and 40b. As can be seen from Fig. 1, in the illustrated embodiment, the antenna axes of first antenna 40a and second antenna 40b, extend substantially in the plane of the drawing, but have a different orientation with respect to each other. In the illustrated case, first antenna 40a and second antenna 40b are arranged in a right angle. Transceiver 10 is connected via a data transmission line (not shown) to the processing unit.

In case a person is wearing headphones 30, the plane of the drawing substantially corresponds to a horizontal plane. The mounting position of the transponders at the central part of the headphone connection member corresponds to the intersection of the vertical axis of rotation of the person's head with the plane of the drawing.

Transceiver (RFID reader) 10 generates a signal in the form of a high frequency electromagnetic field 20. In the simplest case of passive transponders, each of the transponders includes a combination of an antenna coil and a capacitor. Within the range of the electromagnetic field 20, a current is induced in the transponder, and the reader's electromagnetic field is influenced (changed). The field modification can be detected by the reader and evaluated by the processing unit. As described in detail above, data transmission is thereby enabled.

As is known from the law of electromagnetic induction, the intensity of the induced electromagnetic current depends on the relative orientation between the alternate electromagnetic field and the transponder antenna coil. Accordingly, also the level of the transponder response is different for different antenna orientations of the transponder. Consequently, information about the orientation of the transponder antenna can be concluded from an evaluation of the response level.

It is noted that the response level of a transponder depends on further factors such as an overall distance between transceiver 10 and transponder. Moreover, the law of induction allows determination of an unambiguous correlation between orientation and corresponding response level of an antenna only within an angular range from 0° to 90°. Therefore, the present invention employs at least two transponders for determining a single orientation parameter. It is moreover assumed that the distance between the transponders and the transceiver 10 remains substantially unamended, at least after an initial phase of calibration has been performed.

In the case of the head-tracker illustrated in Fig. 1, two transponders 40a and 40b, arranged including an angle of 90° with respect to each other, are fixed at a central position of the headphone connecting member. The transceiver is arranged in front of the headphones, so that each of the transponder antennas includes an angle of approximately 45° with a connection line between transceiver and transponder mounting point in the case of the illustrated symmetric position. Accordingly, response 50a from the first transponder and response 50b from the second transponder have equal levels. The responses can be distinguished, since each response includes the unique transponder ID of the respective transponder.

Since headphones are fixed to the head of a person wearing them, all orientation changes of head and headphones uniquely correspond to each other. Therefore, both the head and the headphones can be equally considered as the object to be tracked by a tracking system according to the present invention.

An overall view of a head 300 is illustrated in Fig. 2. As can be seen from this figure, head 300 has a maximum of 3 rotational degrees of freedom defining the overall orientation of the head (the 3-dimensional object). The three rotational degrees of freedom correspond to a rotation around the illustrated axes X, Y and Z, respectively (roll, yaw, and pitch).

The orientation tracking system according to Fig. 1 is capable of determining the orientation corresponding to a rotation around the vertical axis (Y-axis), while it is assumed that the overall position of the head, as well as the orientation with respect to X and Z-axes, remain constant. The Y-axis as illustrated in Fig. 2 corresponds to an axis protruding the plane of Fig. 1 in perpendicular direction, and intersecting the plane of Fig. 1 at the mounting position of the transponders.

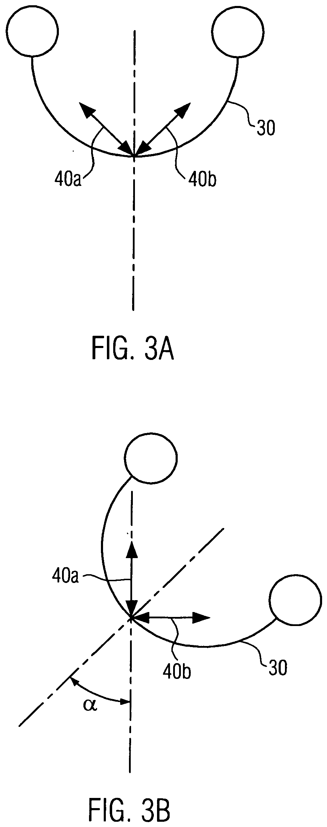

If the head 300 is turned around vertical direction Y in a first direction of rotation by an angle of 45°, it results in the level of the response of the first transponder becoming zero, while the level of the response from the other transponder reaches its maximum. Such a situation is illustrated in Fig. 3. While the arrangement of the headphones in space illustrated in Fig. 3A corresponds to the situation as shown in Fig. 1, a rotation around the vertical axis towards the right hand side round an angle α (α = 45° in the drawing) has occurred in Fig. 3B. Accordingly, one transponder has become substantially parallel to the connection line between transponder location and transceiver, while the antenna orientation of the other transponder has become perpendicular to the connection line (the dash - dot line in Figs. 3A and 3B).

If head 300 is rotated by an angle of 45° in the opposite direction (not shown), the respective response levels show an inverse behaviour. The transponder, the response level of which becomes zero upon turning by 45° towards the right hand side, responds with maximum level upon turning towards the left hand side, and vice versa. As indicated above, for an angle of α = 0, the respective response levels are equal to each other. The response levels of the first and the second transponder respectively change continuously with the rotation angle. Thereby, an orientation change of the head wearing headphones due to rotation around the vertical axis can be detected.

It is further noted that the particular arrangement and the particular values of angles illustrated and described in connection with Figs. 1 and 3 are given by way of example only. A person skilled in the art is aware that other arrangements of at least two transponders the antennas of which have different orientations are applicable within the framework of the present invention.

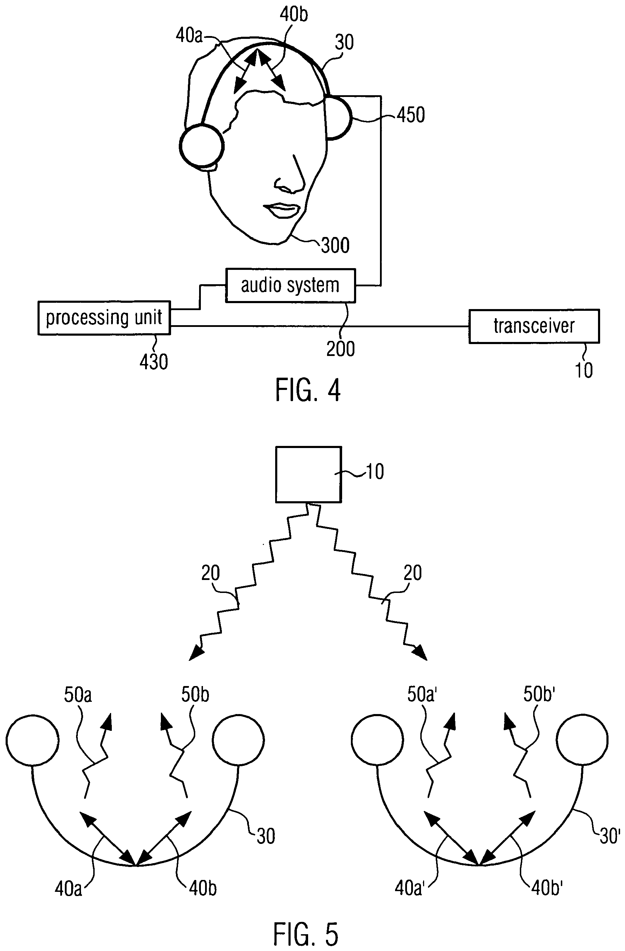

Fig. 4 illustrates an overall scheme of an embodiment of a tracking system according to the present invention employed in the environment of an audio system 200. The audio system 200 is connected to headphones 450 worn by a user 300. Headphones 450 constitute an object, the orientation of which is to be tracked by the tracking system. Audio system 200 further comprises the components known in the art, such as a receiving unit, CD/DVD reproduction devices, an amplifier and a surround sound processing component for headphones; however the possible number and kind of components for audio system 200 is not restricted to these. For instance, together with audio system 200 also video components including one or a plurality of video display devices may be employed.

The components of the illustrative tracking system comprise transceiver 10, two transponders 40a and 40b attached to headphone connection member 30, and processing unit 430 connected to transceiver 10 and audio system 200. Since electromagnetic coupling is employed between transceiver and transponders, no connection line is required between them. Regarding the connection line between audio system 200 and headphones 450, it is noted that a wireless connection can be employed, instead of a physical connection line. It is further noted that the number and particular location of the transponders is not limited to the illustrated example. If desired, more than two transponders can be employed to determine additional orientation parameters corresponding to additional rotational degrees of freedom. Alternatively, additional transponders can be used in order to improve angular resolution or to cover a larger detection span than +/- 45°.

The present invention can also be applied to a configuration wherein the orientation of more than a single object is tracked with a single transceiver. Fig. 5 illustrates a configuration, wherein two objects 30 and 30' respond to signal 20 emitted by transceiver 10. The responses 50a, 50b and 50a', 50b' of the respective transponders of objects 30 and 30' each include the unique transponder identifier stored in the non-volatile memory of each transponder. Therefore, it is no problem to distinguish the responses received from each of the objects from each other for separately evaluating the orientation information in the processing unit. A situation as illustrated in Fig. 4 occurs, for instance, in the case of employing the tracking system according to the present invention for separately tracking the orientation of headphones of two rear seat passengers of a vehicle. It has to be noted that the number of two objects is illustrated only for simplicity, but the present invention is not limited to tracking the orientation of two objects. Tracking a larger number of objects is possible within the framework of the present invention.

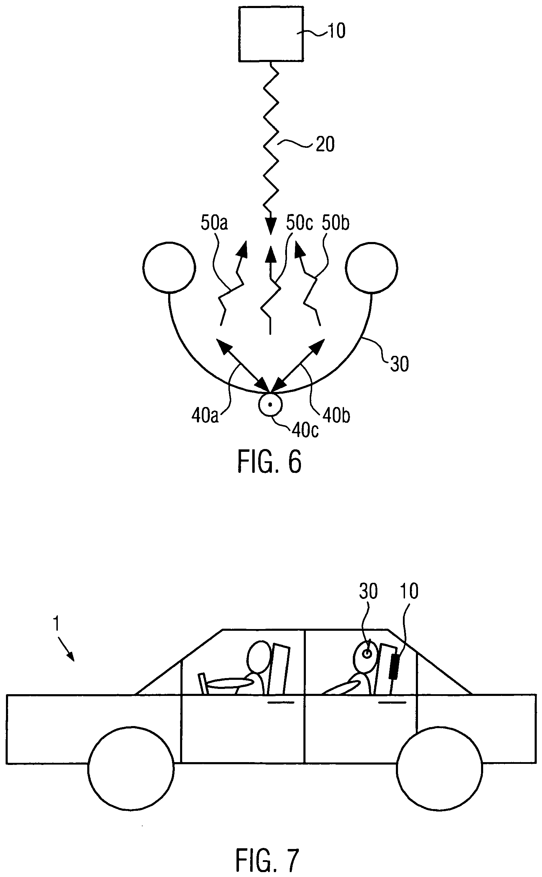

Fig. 6 shows the configuration of another exemplary embodiment of the present invention. The configuration illustrated in Fig. 6 differs from the configuration of Fig. 1, in that the configuration in Fig. 6 comprises three transponders attached to object 30 instead of only two transponders as in Fig. 1. The first and second transponder having antenna orientations 40a and 40b, respectively, substantially extend in the plane of the drawing, and include a right angle with respect to each other. By comparing the responses 50a and 50b to transceiver field 20 received from the first and the second transponder, respectively, an orientation parameter corresponding to a rotation angle round a vertical axis (axis Y of Fig. 2) can be determined, in the same way as in the basic configuration of Fig. 1. The antenna of additional third transponder 40c extends in a perpendicular direction with respect to the plane of the drawing. Antenna 40c is therefore illustrated in the form of a dot within a circle. Accordingly, by comparing response 50c from antenna 40c with the response from either the first transponder (50a) or the second transponder (50b), an additional orientation parameter of object 30 corresponding to a rotation around a horizontal axis (cf. axis Z of Fig. 2) can be determined. In the case of a head wearing headphones, a respective movement corresponds to a nodding of the head. A person skilled in the art is aware that the number of rotational degrees of freedom that can be tracked with the help of a tracking system according to the present invention is not limited to two. With the help of an appropriate arrangement of transponders, up to three rotational degrees of freedom of object 30 can be tracked.

Fig. 7 illustrates a vehicle 1 equipped with a vehicle entertainment and information system according to a particular aspect of the present invention. A person wearing headphones 30 (preferably wireless headphones) occupies a rear seat of the vehicle. In the particular embodiment illustrated in Fig. 7, a transceiver 10 is included into a head rest of the vehicle seat. According to the illustrated configuration, transponders attached to object 30 are always located in close proximity to transceiver 10. Accordingly, a low power tracking system, such as a passive RFID system can be employed. As outlined above, such a system requires especially little hardware effort, and therefore low costs. Since the position of the passenger's head with respect to the head rest is moreover approximately fixed within limited range, in the simplest case a tracking system could even be operated without performing a calibration step each time before using the tracking system.

In summary, the present invention relates to a tracking system and method for determining at least one orientation parameter of an object on the basis of radio frequency identification (RFID) technology. At least two transponders the antennas of which have different orientations with respect to each other are attached to the object, while a transceiver connected to a processing unit is fixed elsewhere in space. An orientation of the object is evaluated based on the orientation-dependent responses of the transponders to a signal emitted by the transceiver. A tracking system according to the present invention is particularly advantageous since the additional hardware with which the object has to be equipped (RFID transponders) consists of only small and low cost items. No special cabling is necessary. A preferred field of application of the present invention is orientation tracking of wireless headphones for simulating surround sound, such as in a vehicle entertainment and information system, or a home cinema application.

## Claims

1. A tracking system for determining orientation of headphones (30, 450) for simulating surround sound reproduction of audio data with respect to a predetermined reference frame,
**characterized by**
a first RFID transponder for being fixed on said headphones (30, 450) and having a first antenna (40a) with a predetermined directivity;
a second RFID transponder for being fixed on said headphones (30, 450) and having a second antenna (40b) with a predetermined directivity, wherein the orientation of said second antenna (40b) is different from the orientation of said first antenna (40a);
a RFID reader (10) for being located at a fixed position with respect to said reference frame, for emitting a signal (20) to the transponders and detecting a level of a response (50a) from said first transponder and a level of a response (50b) from said second transponder; and
a processing unit (430) being connected to said RFID reader (10), for determining an orientation parameter (α) of said headphones (30, 450) based on comparing the level of the response (50a) from the first RFID transponder and the level of the response (50b) from the second RFID transponder.

2. A tracking system according to claim 1, wherein said first and said second transponders being passive RFID transponders.

3. A tracking system according to claim 1, wherein said first and said second transponders being active RFID transponders.

4. A tracking system according to any of claims 1 to 3, wherein
each transponder including a memory for storing a unique transponder identifier; and
said response (50a, 50b) of each of said transponders including the respective unique transponder identifier.

5. A tracking system according to claim 4, further being adapted to determine the orientation of another object (30'); the tracking system further comprising
a third RFID transponder having a third antenna (40a') with a predetermined directivity and a fourth RFID transponder having a fourth antenna (40b') with a predetermined directivity, said third and said fourth RFID transponder being adapted to be fixed to said other object (30'), such that the orientation of said fourth antenna (40b') being different from the orientation of said third antenna (40a'); wherein
said RFID reader (10) further detecting and said processing unit (430) further comparing a response (50a') from said third and a response (50b') from said fourth RFID transponder, for determining an orientation parameter of said other object (30').

6. A tracking system according to claim 4, further comprising a third RFID transponder having a third antenna (40c) with a predetermined directivity, said third RFID transponder being adapted to be fixed to said headphones (30, 450) such that the orientation of said third antenna (40c) being different from the orientation of said first antenna (40a); wherein
said RFID reader (10) further detecting a response (50c) from said third transponder, and
said processing unit (430) further comparing the response (50c) from said third transponder and the response (50a) from said first RFID transponder, for determining a further orientation parameter of said headphones (30, 450).

7. A tracking system according to any of claims 1 to 6, wherein said first and said second RFID transponder are attached to a common location at said headphones (30, 450).

8. A tracking system according to claim 7, wherein said common location being a central portion of said headphones (30, 450).

9. A tracking system according to any of claims 1 to 8, wherein the angle between the orientation of said second antenna (40b) and the orientation of said first antenna (40a) is in the range from 45 to 90 degrees.

10. A tracking system according to claim 9, wherein the angle between the orientation of said second antenna (40b) and the orientation of said first antenna (40a) is in the range from 75 to 90 degrees.

11. A tracking system according to claim 10, wherein the angle between the orientation of said second antenna (40b) and the orientation of said first antenna (40a) is 90 degrees.

12. A tracking system according to any of claims 1 to 11, wherein said orientation parameter (α) being a rotation angle of said headphones (30, 450) around a predetermined axis; and said first and said second antenna (40a, 40b) substantially extending in a plane perpendicular to said predetermined axis.

13. A tracking system according to any of claims 1 to 12, wherein said headphones (30, 450) being wireless headphones.

14. A vehicle entertainment and information system comprising:
headphones (30, 450) simulating a surround reproduction of audio data, and
a tracking system according to any of claims 1 to 13 for determining an orientation parameter (α) of said headphones (30, 450).

15. A vehicle entertainment and information system according to claim 14, wherein said RFID reader (10) being adapted to be included in a head rest mounted to a vehicle seat.

16. A vehicle entertainment and information system according to claim 14 or 15, wherein a portion of said headphones (30, 450) to which said first and said second RFID transponder are fixed remains at a substantially unchanged position with respect to said RFID reader (10).

17. A method of determining the orientation with respect to a predetermined reference frame of headphones (30, 450) for simulating surround sound reproduction of audio data,
**characterized in that**
said headphones (30, 450) having fixed thereto a first RFID transponder including a first antenna (40a) with a predetermined directivity and a second RFID transponder including a second antenna (40b) with a predetermined directivity, wherein the orientation of said second antenna (40b) is different from the orientation of said first antenna (40a), and the method comprising the steps of:
emitting a signal (20) from an RFID reader (10) to the RFID transponders from a fixed position with respect to said reference frame;
detecting a level of a response (50a) from said first RFID transponder and a level of a response (50b) from said second RFID transponder, and
determining an orientation parameter (α) of said headphones (30, 450) based on comparing the level of the response (50a) from the first RFID transponder and the level of the response (50b) from the second RFID transponder.

18. A method according to claim 17, wherein said first and said second transponders being passive RFID transponders.

19. A method according to claim 17, wherein said first and said second transponders being active RFID transponders.

20. A method according to any of claims 17 to 19, wherein
each RFID transponder storing a unique transponder identifier; and
said response (50a, 50b) of each of said RFID transponders including the respective unique transponder identifier.

21. A method according to claim 20, further determining the orientation of another object (30') having fixed thereto a third RFID transponder including a third antenna (40a') with a predetermined directivity and a fourth RFID transponder including a fourth antenna (40b') with a predetermined directivity, such that the orientation of said fourth antenna (40b') being different from the orientation of said third antenna (40a'), the method further comprising the steps of
detecting a response (50a') from said third and a response (50b') from said fourth RFID transponder, and
determining an orientation parameter (α) of said other object (30') based on comparing the response (50a') from said third RFID transponder and the response (50b') from said fourth RFID transponder.

22. A method according to claim 20, wherein a third RFID transponder having a third antenna (40c) with a predetermined directivity being further fixed to said headphones (30, 450) such that the orientation of said third antenna (40c) being different from the orientation of said first antenna (40a), the method further comprising the steps of
detecting a response (50c) from said third RFID transponder, and
determining a further orientation parameter of said headphones (30, 450) based on comparing the response (50c) from said third RFID transponder and the response (50a) from said first RFID transponder.

23. A method according to any of claims 17 to 22, wherein said first and said second RFID transponder are attached to a common location at said headphones (30, 450).

24. A method according to claim 23, wherein said common location being a central portion of said headphones (30, 450).

25. A method according to any of claims 17 to 24, wherein the angle between the orientation of said second antenna (40b) and the orientation of said first antenna (40a) is in the range from 45 to 90 degrees.

26. A method according to claim 25, wherein the angle between the orientation of said second antenna (40b) and the orientation of said first antenna (40a) is in the range from 75 to 90 degrees.

27. A method according to claim 26, wherein the angle between the orientation of said second antenna (40b) and the orientation of said first antenna (40a) is 90 degrees.

28. A method according to any of claims 17 to 27, wherein said orientation parameter (α) being a rotation angle of said headphones (30, 450) around a predetermined axis; and said first and said second antenna (40a, 40b) substantially extending in a plane perpendicular to said predetermined axis.

29. A method according to any of claims 17 to 28, wherein a portion of said headphones (30, 450) to which said first and said second RFID transponder are fixed remains at a substantially unchanged position with respect to said fixed position.

30. A method according to any of claims 17 to 29, wherein said headphones (30, 450) being wireless headphones.

31. A method according to any of claims 17 to 30, further comprising a calibrating step of determining a response (50a, 50b) of said first and said second RFID transponder corresponding to a basic orientation of said headphones (30, 450).

32. A method according to claim 31, further comprising the step of initializing said calibrating step upon a user input.

33. A method according to claim 31 or 32, wherein said calibrating step further determining said basic orientation to be an average orientation over a predetermined period of time.

## Patentansprüche

1. Verfolgungssystem zur Bestimmung der Ausrichtung eines Kopfhörers (30, 450) zum Simulieren von Surround-Sound-Reproduktion von Audiodaten in Bezug auf einen zuvor festgelegten Referenzrahmen,
**gekennzeichnet durch**
einen ersten RFID-Transponder zum Befestigen an dem Kopfhörer (30, 450) und eine erste Antenne (40a) mit einer zuvor festgelegten Richtwirkung aufweisend;
einen zweiten RFID-Transponder zum Befestigen an dem Kopfhörer (30, 450) und eine zweite Antenne (40b) mit einer zuvor festgelegten Richtwirkung aufweisend, wobei sich die Ausrichtung der zweiten Antenne (40b) von der Ausrichtung der ersten Antenne (40a) unterscheidet;
ein RFID-Lesegerät (10) zum Platzieren an einer festen Position in Bezug auf den Referenzrahmen, um ein Signal (20) an die Transponder zu emittieren und einen Grad einer Antwort (50a) von dem ersten Transponder und einen Grad einer Antwort (50b) von dem zweiten Transponder zu erfassen; und
eine Verarbeitungseinheit (430), die mit dem RFID-Lesegerät (10) verbunden ist, um einen Ausrichtungsparameter (α) des Kopfhörers (30, 450) basierend auf dem Vergleich des Grades der Antwort (50a) von dem ersten RFID-Transponder und des Grades der Antwort (50b) von dem zweiten RFID-Transponder zu bestimmen.

2. Verfolgungssystem nach Anspruch 1, wobei der erste und zweite Transponder passive RFID-Transponder sind.

3. Verfolgungssystem nach Anspruch 1, wobei der erste und zweite Transponder aktive RFID-Transponder sind.

4. Verfolgungssystem nach einem der Ansprüche 1 bis 3, wobei jeder Transponder einen Speicher zum Speichern einer einmaligen Transponderkennung beinhaltet; und
die Antwort (50a, 50b) von jedem der Transponder die jeweilige einmalige Transponderkennung enthält.

5. Verfolgungssystem nach Anspruch 4, ferner angepasst, um die Ausrichtung eines anderen Gegenstands (30') zu bestimmen, wobei das Verfolgungssystem ferner Folgendes umfasst:
einen dritten RFID-Transponder, der eine dritte Antenne (40a') mit einer zuvor festgelegten Richtwirkung aufweist, und einen vierten RFID-Transponder, der eine vierte Antenne (40b') mit einer zuvor festgelegten Richtwirkung aufweist, wobei der dritte und vierte RFID-Transponder angepasst sind, um an dem anderen Gegenstand (30') befestigt zu werden, sodass sich die Ausrichtung der vierten Antenne (40b') von der Ausrichtung der dritten Antenne (40a') unterscheidet; wobei
das RFID-Lesegerät (10) ferner eine Antwort (50a') von dem dritten und eine Antwort (50b') von dem vierten RFID-Transponder erfasst und die Verarbeitungseinheit (430) diese ferner vergleicht, um einen Ausrichtungsparameter des anderen Gegenstands (30') zu bestimmen.

6. Verfolgungssystem nach Anspruch 4, ferner umfassend einen dritten RFID-Transponder, der eine dritte Antenne (40c) mit einer zuvor festgelegten Richtwirkung aufweist, wobei der dritte RFID-Transponder angepasst ist, um an dem Kopfhörer (30, 450) befestigt zu werden, sodass sich die Ausrichtung der dritten Antenne (40c) von der Ausrichtung der ersten Antenne (40a) unterscheidet; wobei
das RFID-Lesegerät (10) ferner eine Antwort (50c) von dem dritten Transponder erfasst, und
die Verarbeitungseinheit (430) ferner die Antwort (50c) von dem dritten Transponder und die Antwort (50a) von dem ersten RFID-Transponder vergleicht, um einen weiteren Ausrichtungsparameter des Kopfhörers (30, 450) zu bestimmen.

7. Verfolgungssystem nach einem der Ansprüche 1 bis 6, wobei der erste und der zweite RFID-Transponder an einer gemeinsamen Stelle an dem Kopfhörer (30, 450) angebracht sind.

8. Verfolgungssystem nach Anspruch 7, wobei die gemeinsame Stelle ein mittiger Abschnitt des Kopfhörers (30, 450) ist.

9. Verfolgungssystem nach einem der Ansprüche 1 bis 8, wobei der Winkel zwischen der Ausrichtung der zweiten Antenne (40b) und der Ausrichtung der ersten Antenne (40a) in der Spanne von 45 bis 90 Grad liegt.

10. Verfolgungssystem nach Anspruch 9, wobei der Winkel zwischen der Ausrichtung der zweiten Antenne (40b) und der Ausrichtung der ersten Antenne (40a) in der Spanne von 75 bis 90 Grad liegt.

11. Verfolgungssystem nach Anspruch 10, wobei der Winkel zwischen der Ausrichtung der zweiten Antenne (40b) und der Ausrichtung der ersten Antenne (40a) 90 Grad beträgt.

12. Verfolgungssystem nach einem der Ansprüche 1 bis 11, wobei der Ausrichtungsparameter (α) ein Drehwinkel des Kopfhörers (30, 450) um eine zuvor festgelegte Achse ist; und
wobei sich die erste und die zweite Antenne (40a, 40b) im Wesentlichen auf einer Ebene senkrecht zu der zuvor festgelegten Achse erstrecken.

13. Verfolgungssystem nach einem der Ansprüche 1 bis 12, wobei der Kopfhörer (30, 450) ein drahtloser Kopfhörer ist.

14. Fahrzeugunterhaltungs- und -informationssystem, umfassend:
einen Kopfhörer (30, 450), der eine Surround-Reproduktion von Audiodaten simuliert, und
ein Verfolgungssystem nach einem der Ansprüche 1 bis 13 zur Bestimmung eines Ausrichtungsparameters (α) des Kopfhörers (30, 450).

15. Fahrzeugunterhaltungs- und -informationssystem nach Anspruch 14, wobei das RFID-Lesegerät (10) angepasst ist, um in einer an einem Fahrzeugsitz angebrachten Kopfstütze enthalten zu sein.

16. Fahrzeugunterhaltungs- und -informationssystem nach Anspruch 14 oder 15, wobei ein Abschnitt des Kopfhörers (30, 450), an dem der erste und der zweite RFID-Transponder befestigt sind, in einer im Wesentlichen unveränderten Position in Bezug auf das RFID-Lesegerät (10) bleibt.

17. Verfahren zur Bestimmung der Ausrichtung in Bezug auf einen zuvor festgelegten Referenzrahmen eines Kopfhörers (30, 450) zum Simulieren von Surround-Sound-Reproduktion von Audiodaten,
**dadurch gekennzeichnet, dass**
der Kopfhörer (30, 450) einen daran befestigten ersten RFID-Transponder mit einer ersten Antenne (40a) mit einer zuvor festgelegten Richtwirkung und einen zweiten RFID-Transponder mit einer zweiten Antenne (40b) mit einer zuvor festgelegten Richtwirkung aufweist, wobei sich die Ausrichtung der zweiten Antenne (40b) von der Ausrichtung der ersten Antenne (40a) unterscheidet und das Verfahren die folgenden Schritte umfasst:
Emittieren eines Signals (20) von einem RFID-Lesegerät (10) zu den RFID-Transpondern von einer festen Position in Bezug auf den Referenzrahmen;
Erfassen eines Grades einer Antwort (50a) von dem ersten RFID-Transponder und eines Grades einer Antwort (50b) von dem zweiten RFID-Transponder, und
Bestimmen eines Ausrichtungsparameters (α) des Kopfhörers (30, 450) basierend auf dem Vergleich des Grades der Antwort (50a) von dem ersten RFID-Transponder und des Grades der Antwort (50b) von dem zweiten RFID-Transponder.

18. Verfahren nach Anspruch 17, wobei der erste und der zweite Transponder passive RFID-Transponder sind.

19. Verfahren nach Anspruch 17, wobei der erste und der zweite Transponder aktive RFID-Transponder sind.

20. Verfahren nach einem der Ansprüche 17 bis 19, wobei jeder RFID-Transponder eine einmalige Transponderkennung speichert; und
die Antwort (50a, 50b) von jedem der RFID-Transponder die jeweilige einmalige Transponderkennung enthält.

21. Verfahren nach Anspruch 20, ferner bestimmend die Ausrichtung eines anderen Gegenstands (30'), der einen daran befestigten dritten RFID-Transponder mit einer dritten Antenne (40a') mit einer zuvor festgelegten Richtwirkung und einen vierten RFID-Transponder mit einer vierten Antenne (40b') mit einer zuvor festgelegten Richtwirkung aufweist, sodass sich die Ausrichtung der vierten Antenne (40b') von der Ausrichtung der dritten Antenne (40a') unterscheidet, wobei das Verfahren ferner die folgenden Schritte umfasst:
Erfassen einer Antwort (50a') von dem dritten und einer Antwort (50b') von dem vierten RFID-Transponder, und
Bestimmen eines Ausrichtungsparameters (α) des anderen Gegenstands (30') basierend auf dem Vergleich der Antwort (50a') von dem dritten RFID-Transponder und der Antwort (50b') von dem vierten RFID-Transponder.

22. Verfahren nach Anspruch 20, wobei ein dritter RFID-Transponder, der eine dritte Antenne (40c) mit einer zuvor festgelegten Richtwirkung aufweist, ferner an dem Kopfhörer (30, 450) befestigt ist, sodass sich die Ausrichtung der dritten Antenne (40c) von der Ausrichtung der ersten Antenne (40a) unterscheidet, wobei das Verfahren ferner die folgenden Schritte umfasst:
Erfassen einer Antwort (50c) von dem dritten RFID-Transponder, und
Bestimmen eines weiteren Ausrichtungsparameters des Kopfhörers (30, 450) basierend auf dem Vergleich der Antwort (50c) von dem dritten RFID-Transponder und der Antwort (50a) von dem ersten RFID-Transponder.

23. Verfahren nach einem der Ansprüche 17 bis 22, wobei der erste und der zweite RFID-Transponder an einer gemeinsamen Stelle an dem Kopfhörer (30, 450) angebracht sind.

24. Verfahren nach Anspruch 23, wobei die gemeinsame Stelle ein mittiger Abschnitt des Kopfhörers (30, 450) ist.

25. Verfahren nach einem der Ansprüche 17 bis 24, wobei der Winkel zwischen der Ausrichtung der zweiten Antenne (40b) und der Ausrichtung der ersten Antenne (40a) in der Spanne von 45 bis 90 Grad liegt.

26. Verfahren nach Anspruch 25, wobei der Winkel zwischen der Ausrichtung der zweiten Antenne (40b) und der Ausrichtung der ersten Antenne (40a) in der Spanne von 75 bis 90 Grad liegt.

27. Verfahren nach Anspruch 26, wobei der Winkel zwischen der Ausrichtung der zweiten Antenne (40b) und der Ausrichtung der ersten Antenne (40a) 90 Grad beträgt.

28. Verfahren nach einem der Ansprüche 17 bis 27, wobei der Ausrichtungsparameter (α) ein Drehwinkel des Kopfhörers (30, 450) um eine zuvor festgelegte Achse ist; und
wobei sich die erste und die zweite Antenne (40a, 40b) im Wesentlichen auf einer Ebene senkrecht zu der zuvor festgelegten Achse erstrecken.

29. Verfahren nach einem der Ansprüche 17 bis 28, wobei ein Abschnitt des Kopfhörers (30, 450), an dem der erste und der zweite RFID-Transponder befestigt sind, in einer im Wesentlichen unveränderten Position in Bezug auf die feste Position bleibt.

30. Verfahren nach einem der Ansprüche 17 bis 29, wobei der Kopfhörer (30, 450) ein drahtloser Kopfhörer ist.

31. Verfahren nach einem der Ansprüche 17 bis 30, ferner umfassend einen Kalibrierschritt des Bestimmens einer Antwort (50a, 50b) von dem ersten und dem zweiten RFID-Transponder entsprechend einer Basisausrichtung des Kopfhörers (30, 450).

32. Verfahren nach Anspruch 31, ferner umfassend den Schritt des Initialisierens des Kalibrierschrittes bei einer Nutzereingabe.

33. Verfahren nach Anspruch 31 oder 32, wobei der Kalibrierschritt ferner die Basisausrichtung als eine durchschnittliche Ausrichtung über einen zuvor festgelegten Zeitraum bestimmt.

## Revendications

1. Système de suivi pour déterminer une orientation de casque d'écoute (30, 450) pour simuler la reproduction de son d'ambiance de données audio par rapport à un cadre de référence prédéterminé,
**caractérisé par**
un premier transpondeur RFID destiné à être fixé sur ledit casque d'écoute (30, 450) et possédant une première antenne (40a) avec une directivité prédéterminée ;
un deuxième transpondeur RFID destiné à être fixé sur ledit casque d'écoute (30, 450) et possédant une deuxième antenne (40b) avec une directivité prédéterminée, dans lequel l'orientation de ladite deuxième antenne (40b) est différente de l'orientation de ladite première antenne (40a) ;
un lecteur RFID (10) destiné à être situé à une position fixe par rapport audit cadre de référence, pour émettre un signal (20) aux transpondeurs et détecter un niveau d'une réponse (50a) à partir dudit premier transpondeur et un niveau d'une réponse (50b) à partir dudit deuxième transpondeur ; et une unité de traitement (430) connectée audit lecteur RFID (10), pour déterminer un paramètre d'orientation (α) dudit casque d'écoute (30, 450) en fonction de la comparaison du niveau de la réponse (50a) à partir du premier transpondeur RFID et du niveau de la réponse (50b) à partir du deuxième transpondeur RFID.

2. Système de suivi selon la revendication 1, dans lequel ledit premier et ledit deuxième transpondeurs sont des transpondeurs RFID passifs.

3. Système de suivi selon la revendication 1, dans lequel ledit premier et ledit deuxième transpondeurs sont des transpondeurs RFID actifs.

4. Système de suivi selon l'une quelconque des revendications 1 à 3, dans lequel
chaque transpondeur inclut une mémoire pour stocker un identifiant de transpondeur unique ; et
ladite réponse (50a, 50b) de chacun desdits transpondeurs inclut l'identifiant de transpondeur unique respectif.

5. Système de suivi selon la revendication 4, étant en outre adapté pour déterminer l'orientation d'un autre objet (30') ; le système de suivi comprenant en outre
un troisième transpondeur RFID possédant une troisième antenne (40a') avec une directivité prédéterminée et un quatrième transpondeur RFID possédant une quatrième antenne (40b') avec une directivité prédéterminée, lesdits troisième et quatrième transpondeurs RFID étant adaptés pour être fixés audit autre objet (30'), de telle sorte que l'orientation de ladite quatrième antenne (40b') soit différente de l'orientation de ladite troisième antenne (40a') ; dans lequel
ledit lecteur RFID (10) détecte en outre, et ladite unité de traitement (430) compare en outre, une réponse (50a') à partir dudit troisième, et une réponse (50b') à partir dudit quatrième, transpondeurs RFID, pour déterminer un paramètre d'orientation dudit autre objet (30').

6. Système de suivi selon la revendication 4, comprenant en outre un troisième transpondeur RFID possédant une troisième antenne (40c) avec une directivité prédéterminée, ledit troisième transpondeur RFID étant adapté pour être fixé audit casque d'écoute (30, 450) de telle sorte que l'orientation de ladite troisième antenne (40c) soit différente de l'orientation de ladite première antenne (40a) ; dans lequel ledit lecteur RFID (10) détecte en outre une réponse (50c) à partir dudit troisième transpondeur, et
ladite unité de traitement (430) compare en outre la réponse (50c) à partir dudit troisième transpondeur et la réponse (50a) à partir dudit premier transpondeur RFID, pour déterminer un paramètre d'orientation supplémentaire dudit casque d'écoute (30, 450).

7. Système de suivi selon l'une quelconque des revendications 1 à 6, dans lequel ledit premier et ledit deuxième transpondeurs RFID sont fixés à un emplacement commun sur ledit casque d'écoute (30, 450).

8. Système de suivi selon la revendication 7, dans lequel ledit emplacement commun est une portion centrale dudit casque d'écoute (30, 450).

9. Système de suivi selon l'une quelconque des revendications 1 à 8, dans lequel l'angle entre l'orientation de ladite deuxième antenne (40b) et l'orientation de ladite première antenne (40a) est dans la plage de 45 à 90 degrés.

10. Système de suivi selon la revendication 9, dans lequel l'angle entre l'orientation de ladite deuxième antenne (40b) et l'orientation de ladite première antenne (40a) est dans la plage de 75 à 90 degrés.

11. Système de suivi selon la revendication 10, dans lequel l'angle entre l'orientation de ladite deuxième antenne (40b) et l'orientation de ladite première antenne (40a) est de 90 degrés.

12. Système de suivi selon l'une quelconque des revendications 1 à 11, dans lequel ledit paramètre d'orientation (α) est un angle de rotation dudit casque d'écoute (30, 450) autour d'un axe prédéterminé ; et
ladite première et ladite deuxième antennes (40a, 40b) s'étendent sensiblement dans un plan perpendiculaire audit axe prédéterminé.

13. Système de suivi selon l'une quelconque des revendications 1 à 12, dans lequel ledit casque d'écoute (30, 450) est un casque d'écoute sans fil.

14. Système de divertissement et d'informations pour véhicule comprenant :
un casque d'écoute (30, 450) stimulant une reproduction d'ambiance de données audio, et
un système de suivi selon l'une quelconque des revendications 1 à 13 pour déterminer un paramètre d'orientation (α) dudit casque d'écoute (30, 450).

15. Système de divertissement et d'informations pour véhicule selon la revendication 14, dans lequel ledit lecteur RFID (10) est adapté pour être inclus dans un appui-tête monté sur un siège de véhicule.

16. Système de divertissement et d'informations pour véhicule selon la revendication 14 ou 15, dans lequel une portion dudit casque d'écoute (30, 450) à laquelle ledit premier et ledit deuxième transpondeurs RFID sont fixés reste à une position sensiblement inchangée par rapport audit lecteur RFID (10).

17. Procédé de détermination de l'orientation par rapport à un cadre de référence prédéterminé de casque d'écoute (30, 450) pour simuler la reproduction de son d'ambiance de données audio,
**caractérisé en ce que**
ledit casque d'écoute (30, 450) possède, fixés à celui-ci, un premier transpondeur RFID incluant une première antenne (40a) avec une directivité prédéterminée et un deuxième transpondeur RFID incluant une deuxième antenne (40b) avec une directivité prédéterminée, dans lequel l'orientation de ladite deuxième antenne (40b) est différente de l'orientation de ladite première antenne (40a), et le procédé comprend les étapes de :
l'émission d'un signal (20) d'un lecteur RFID (10) aux transpondeurs RFID à partir d'une position fixe par rapport audit cadre de référence ;
la détection d'un niveau d'une réponse (50a) à partir dudit premier transpondeur RFID et d'un niveau d'une réponse (50b) à partir dudit deuxième transpondeur RFID, et
la détermination d'un paramètre d'orientation (α) dudit casque d'écoute (30, 450) en fonction de la comparaison du niveau de la réponse (50a) à partir du premier transpondeur RFID et du niveau de la réponse (50b) à partir du deuxième transpondeur RFID.

18. Procédé selon la revendication 17, dans lequel ledit premier et ledit deuxième transpondeurs sont des transpondeurs RFID passifs.

19. Procédé selon la revendication 17, dans lequel ledit premier et ledit deuxième transpondeurs sont des transpondeurs RFID actifs.

20. Procédé selon l'une quelconque des revendications 17 à 19, dans lequel
chaque transpondeur RFID stocke un identifiant de transpondeur unique ; et
ladite réponse (50a, 50b) de chacun desdits transpondeurs RFID inclut l'identifiant de transpondeur unique respectif.

21. Procédé selon la revendication 20, déterminant en outre l'orientation d'un autre objet (30') possédant, fixé à celui-ci, un troisième transpondeur RFID incluant une troisième antenne (40a') avec une directivité prédéterminée et un quatrième transpondeur RFID incluant une quatrième antenne (40b') avec une directivité prédéterminée, de telle sorte que l'orientation de ladite quatrième antenne (40b') soit différente de l'orientation de ladite troisième antenne (40a'), le procédé comprenant en outre les étapes de la détection d'une réponse (50a') à partir dudit troisième, et d'une réponse (50b') à partir dudit quatrième, transpondeurs RFID, et
la détermination d'un paramètre d'orientation (α) dudit autre objet (30') en fonction de la comparaison de la réponse (50a') à partir dudit troisième transpondeur RFID et de la réponse (50b') à partir dudit quatrième transpondeur RFID.

22. Procédé selon la revendication 20, dans lequel un troisième transpondeur RFID possédant une troisième antenne (40c) avec une directivité prédéterminée est en outre fixé audit casque d'écoute (30, 450) de telle sorte que l'orientation de ladite troisième antenne (40c) soit différente de l'orientation de ladite première antenne (40a), le procédé comprenant en outre les étapes de
la détection d'une réponse (50c) à partir dudit troisième transpondeur RFID, et
la détermination d'un paramètre d'orientation supplémentaire dudit casque d'écoute (30, 450) en fonction de la comparaison de la réponse (50c) à partir dudit troisième transpondeur RFID et de la réponse (50a) à partir dudit premier transpondeur RFID.

23. Procédé selon l'une quelconque des revendications 17 à 22, dans lequel ledit premier et ledit deuxième transpondeurs RFID sont fixés à un emplacement commun sur ledit casque d'écoute (30, 450).

24. Procédé selon la revendication 23, dans lequel ledit emplacement commun est une portion centrale dudit casque d'écoute (30, 450).

25. Procédé selon l'une quelconque des revendications 17 à 24, dans lequel l'angle entre l'orientation de ladite deuxième antenne (40b) et l'orientation de ladite première antenne (40a) est dans la plage de 45 à 90 degrés.

26. Procédé selon la revendication 25, dans lequel l'angle entre l'orientation de ladite deuxième antenne (40b) et l'orientation de ladite première antenne (40a) est dans la plage de 75 à 90 degrés.

27. Procédé selon la revendication 26, dans lequel l'angle entre l'orientation de ladite deuxième antenne (40b) et l'orientation de ladite première antenne (40a) est de 90 degrés.

28. Procédé selon l'une quelconque des revendications 17 à 27, dans lequel ledit paramètre d'orientation (α) est un angle de rotation dudit casque d'écoute (30, 450) autour d'un axe prédéterminé ; et
ladite première et ladite deuxième antennes (40a, 40b) s'étendent sensiblement dans un plan perpendiculaire audit axe prédéterminé.

29. Procédé selon l'une quelconque des revendications 17 à 28, dans lequel une portion dudit casque d'écoute (30, 450) à laquelle ledit premier et ledit deuxième transpondeur RFID sont fixés reste à une position sensiblement inchangée par rapport à ladite position fixe.

30. Procédé selon l'une quelconque des revendications 17 à 29, dans lequel ledit casque d'écoute (30, 450) est un casque d'écoute sans fil.

31. Procédé selon l'une quelconque des revendications 17 à 30, comprenant en outre une étape d'étalonnage de la détermination d'une réponse (50a, 50b) dudit premier et dudit deuxième transpondeur RFID correspondant à une orientation de base dudit casque d'écoute (30, 450).

32. Procédé selon la revendication 31, comprenant en outre l'étape de l'initialisation de ladite étape d'étalonnage sur une entrée utilisateur.

33. Procédé selon la revendication 31 ou 32, dans lequel ladite étape d'étalonnage détermine en outre ladite orientation de base destinée à être une orientation moyenne Durant une période prédéterminée.
